# EUROPÄISCHE PATENTSCHRIFT

(11) **EP 3 808 528 B1**
(45) Veröffentlichungstag und Bekanntmachung des Hinweises auf die Patenterteilung: **05.11.2025**
(21) Anmeldenummer: 20197954.9
(22) Anmeldetag: 24.09.2020
(51) Int. Cl.: B29C 45/16, B29C 45/37, B29C 45/44, F16F 1/371, B29C 45/14, B29C 45/36, B29K 21/00, B29K 105/00, B29L 31/00, B61F 5/10, B61F 5/30, B29C 45/40, B29C 33/56

(54) **VERFAHREN ZUR HERSTELLUNG EINES BESCHICHTETEN AUFLAGERELEMENTS AUS ELASTOMERMATERIAL**
METHOD OF MAKING A COATED SUPPORT ELEMENT MADE OF ELASTOMERIC MATERIAL
PROCÉDÉ DE FABRICATION D'UN ÉLÉMENT D'APPUI REVÊTU À PARTIR D'ÉLASTOMÈRE

(30) Priorität: 17.10.2019 DE 102019215997
(43) Veröffentlichungstag der Anmeldung: 21.04.2021
(73) Patentinhaber: ContiTech Deutschland GmbH, 30175 Hannover (DE)
(72) Erfinder: Kranz, Harald - c/o Continental AG, 30419 Hannover (DE)
(74) Vertreter: Preusser, Andrea

(56) Entgegenhaltungen:
- EP-A1- 2 196 492
- WO-A1-98/46930
- JP-A- 2005 007 608
- JP-A- 2012 086 762
- JP-A- S60 116 419
- US-A1- 2017 267 260

## Beschreibung

Die vorliegende Erfindung betrifft ein Verfahren zur Herstellung eines mit einer Beschichtung beschichteten Auflagerelements aus Elastomermaterial, insbesondere für Fahrzeuge, vorzugsweise für Schienenfahrzeuge. Das Auflagerelement kann insbesondere ein Federelement sein und die Beschichtung des Auflagerelements kann insbesondere eine Brandschutzbeschichtung sein. Ein weiterer Aspekt der Erfindung betrifft ein solches Auflagerelement aus Elastomermaterial.

Um die Brandschutzeigenschaften von Schienenfahrzeugen zu erhöhen, sollen dort eingesetzte Elastomerfedern mit einer Brandschutzbeschichtung versehen werden, welche vorgegebene Brandschutznormen erfüllt. Die Herstellung der Beschichtung und das Aufbringen dieser auf den eigentlichen Federkörper sind jedoch aus mehreren Gründen schwierig. Insbesondere ist es schwierig, die unterschiedlichen Gummimischungen von Federkörper und Beschichtung zu verbinden und definierte Schichtdicken zu gewährleisten, um auf diese Weise einen reproduzierbaren Fertigungsprozess zu erhalten.

Beispielsweise betrifft die EP 2196492 A1 einen elastomeren Körper mit einer elastischen, flammhemmenden Beschichtung.

Die JP 2005007608 A die Herstellung von Gummilagern für Vorderstabilisatoren durch Zweikomponenten-Spritzgießen von vulkanisierbaren Elastomeren, wobei zunächst die äußere Schicht gespritzt und nach dem Ziehen eines Werkzeugkerns der innere Teil des Lagers gespritzt wird.

Die WO 9846930 A1 offenbart eine aus zwei Komponenten gebildete Feder, wobei der innere Block spritzgegossen sein kann. Der innere Block wird hierbei vollständig vernetzt. Danach wird der innere Block mit einer Ummantelung beschichtet.

Insgesamt gestaltet sich die Herstellung eines aus mehreren Komponenten gebildeten Verbundkörpers verfahrenstechnisch als äußerst aufwendig, da ein Abkühlen der zuerst hergestellten Komponente erforderlich ist, sodass das Herstellungsvorrichtung eine Kühlfunktion aufweisen muss, was die Konstruktion bzw. Herstellung der Herstellungsvorrichtung kompliziert und teuer werden lässt.

Daher ist die Aufgabe der vorliegenden Erfindung, ein Verfahren bereitzustellen, das die oben genannten Schwierigkeiten überwindet.

Diese Aufgabe wird durch ein Verfahren zur Herstellung eines beschichteten Auflagerelements aus Elastomermaterial gemäß dem Anspruch 1 gelöst. Vorteilhafte Ausführungsformen sind in den abhängigen Ansprüchen definiert.

Das Verfahren umfasst insbesondere die folgenden Schritte:
Zunächst wird eine Einspritzpressvorrichtung mit mehreren relativ zueinander beweglichen Formteilen bereitgestellt. In einer geschlossenen Stellung der Formteile umschließen diese gemeinsam einen Hohlraum. Der Hohlraum entspricht vorzugsweise der Form des herzustellenden Auflagerelements.

In den Hohlraum wird nun ein Formkern eingelegt. Der Formkern entspricht vorzugsweise der Form des herzustellenden Auflagerelements abzüglich einer Beschichtung. Dabei bleibt zwischen den Formteilen und dem Formkern ein Spalt, welcher vorzugsweise der Form der Beschichtung des herzustellenden Auflagerelements entspricht.

Anschließend wird eine erste Mischung, insbesondere eine Elastomermischung, in den Spalt eingefügt. Dabei wird die erste Mischung vorzugsweise durch Schließen der Formteile plastifiziert und füllt den Spalt aus, vorzugsweise vollständig aus. Auf diese Weise bildet die erste Mischung eine Hülle, welche die Form der Beschichtung hat.

Anschließend wird die Hülle vor dem Abkühlen anvulkanisiert. Das bedeutet, der Vulkanisationsprozess wird begonnen aber noch nicht abgeschlossen, so dass zumindest die Oberfläche der Hülle gehärtet ist. Auf diese Weise kann die Hülle von den Formteilen und dem Formkern gelöst werden.

Dann wird der Formkern aus der Hülle entfernt. Das Entfernen des Formkerns kann auch dadurch erleichtert werden, dass der Formkern als Zerfallskern ausgebildet ist, der in kleine Teile zerlegt werden kann, die leichter entfernt werden können.

Danach wird die Hülle zum Abkühlen aus dem Hohlraum entfernt. Dazu werden die Formteile in die geöffnete Stellung gebracht, zunächst der Formkern entnommen und anschließend die Hülle entnommen. Abhängig von der Ausgestaltung der Formteile und des Formkerns ist es alternativ auch möglich, dass die Hülle zusammen mit dem Formkern entnommen wird oder aber nach dem Formkern entnommen wird. Auf diese Weise kann die Hülle außerhalb der Einspritzpressvorrichtung abgekühlt werden, so dass die Formteile nicht mit einer Kühlfunktion versehen sein müssen.

Nachfolgend wird die Hülle so weit abgekühlt, bis die Steifigkeit der Hülle erhöht und deren Formstabilität erreicht ist. D.h., die Hülle wird so weit abgekühlt, vorzugsweise bis unterhalb der Glastemperatur, bis deren Steifigkeit derart erhöht ist, dass die Hülle nach Entfernen des Formkerns formstabil bleibt und nicht zusammenfällt.

Nach dem Abkühlen wird die Hülle wieder in den Hohlraum eingefügt. Auf diese Weise wird die Hülle durch die Formteile von außen gestützt, so dass der Formkern entfernt und die zweite Mischung eingespritzt werden kann, ohne dass die Hülle gedehnt oder dessen Form verändert wird.

Danach wird, vorzugsweise unter Druck in geschlossener Stellung der Formteile, eine zweite Mischung, insbesondere eine Elastomermischung verschieden von der ersten Mischung, in den Hohlraum eingespritzt. Das Einspritzen erfolgt vorzugsweise durch eine oder mehrere Öffnungen in den Formteilen. Dabei wird die zweite Mischung vorzugsweise plastifiziert und bildet einen Auflagerkörper, der an der Innenseite der Hülle anliegt. Vorzugsweise nimmt dieser Auflagerkörper den durch Entfernen des Formkerns freigewordenen Teil des Hohlraums vollständig ein. Alternativ kann der Auflagerkörper jedoch auch teilweise oder vollständig hohl ausgebildet sein.

Der Auflagerkörper kann neben der zweiten Mischung auch noch weitere Komponenten, wie beispielsweise Metallteile, enthalten oder mit diesen verbunden sein. So können Metallplatten, die beispielsweise als Lasteinleitungselemente dienen, an der Oberseite und/oder an der Unterseite des Auflagerkörpers vorgesehen sein, die mit der zweiten Mischung bzw. dem Elastomermaterial des Auflagerkörpers verbunden, beispielsweise verklebt, sind bzw. werden. Solche Metallplatten können vor und/oder nach dem Einspritzen der zweiten Mischung in den Hohlraum eingebracht werden, welcher die Form der Metallplatten berücksichtigt. Die Beschichtung wird dabei vorzugsweise nur an denjenigen Oberflächen des Auflagerkörpers aufgebracht, die nicht von Metallplatten bedeckt sind.

Alternativ oder zusätzlich zu den Metallplatten kann der Auflagerkörper mit verstärkenden Metallblättern durchzogen sein. Solche Metallblätter können vor dem Einspritzen der zweiten Mischung in dem Hohlraum vorgesehen werden, so dass die zweite Mischung um diese herumgespritzt wird. Auf diese Weise kann ein Auflagerkörper aus einem Elastomer-Metall-Verbundmaterial gebildet werden.

Schließlich wird der Auflagerkörper zusammen mit der Hülle in dem Hohlraum ausvulkanisiert. Dabei werden der Auflagerkörper und die Hülle miteinander verbunden, so dass die Hülle die Beschichtung des Auflagerkörpers bildet. Dabei sollte die Dauer der Vulkanisation ausreichend sein, um die abgekühlte Hülle auf Vulkanisationstemperatur aufzuheizen.

Anschließend wird das fertiggestellte beschichtete Auflagerelement, d.h. der mit der Beschichtung versehene Auflagerkörper, aus dem Hohlraum entnommen.

Auf diese Weise kann ein beschichtetes Auflagerelement hoher Qualität in einem effizienten und gut reproduzierbaren Fertigungsprozess hergestellt werden.

Das Abkühlen der Hülle erfolgt vorzugsweise in einer Kühlkammer oder durch Anblasen mit gekühltem Gas. Beides sind einfache und effiziente Kühlmethoden, denen die entnommene Hülle leicht unterzogen werden kann.

In einer bevorzugten Ausführungsform ist die Beschichtung eine Brandschutzbeschichtung, vorzugsweise aus einem Brandschutzelastomermaterial, das von Feuer oder sehr hohen Temperaturen nicht bzw. nur sehr langsam zerstört wird. Insbesondere ist die erste Mischung eine Brandschutzkautschukmischung. Auf diese Weise kann das Elastomermaterial des Auflagerkörpers geschützt werden, um seine Funktion beizubehalten.

In einer weiteren bevorzugten Ausführungsform ist das Auflagerelement als Notfederelement für Luftfedern von Schienenfahrzeugen oder als Primärfederelement (innerhalb des Drehgestells zwischen Radsatz und Drehgestellrahmen) für Schienenfahrzeuge gebildet. Die Luftfedern sind dabei insbesondere die Sekundärfedern, die zwischen Wagenkasten und Drehgestell vorgesehen sind, während die Primärfederelemente insbesondere innerhalb des Drehgestells zwischen Radsatz und Drehgestellrahmen vorgesehen sind. Alternativ kann das Auflagerelement auch für andere Fahrzeuge, wie Kraftfahrzeuge vorgesehen sein.

Das erfindungsgemäß hergestellte Auflagerelement aus Elastomermaterial kann für Fahrzeuge, insbesondere Schienenfahrzeuge, beschichtet mit einer Brandschutzbeschichtung, insbesondere aus einem von dem Auflagerkörper verschiedenen, brandgeschützten Elastomermaterial, verwendet werden. Die im Zusammenhang mit dem Verfahren erläuterten Merkmale und Wirkungen gelten für das vorliegende Auflagerelement entsprechend.

Im Folgenden wird ein bevorzugtes Ausführungsbeispiel des erfindungsgemäßen Verfahrens anhand einer Zeichnung näher erläutert. Die Zeichnung zeigt in
- Fig. 1: eine schematische Querschnittsansicht einer Einspritzpressvorrichtung während eines ersten Schritts des Verfahrens, in welchem die Hülle hergestellt wird, und
- Fig. 2: eine schematische Querschnittsansicht einer Einspritzpressvorrichtung während eines zweiten Schritts des Verfahrens, in welchem der Auflagerkörper von innen an die Hülle gespritzt wird.

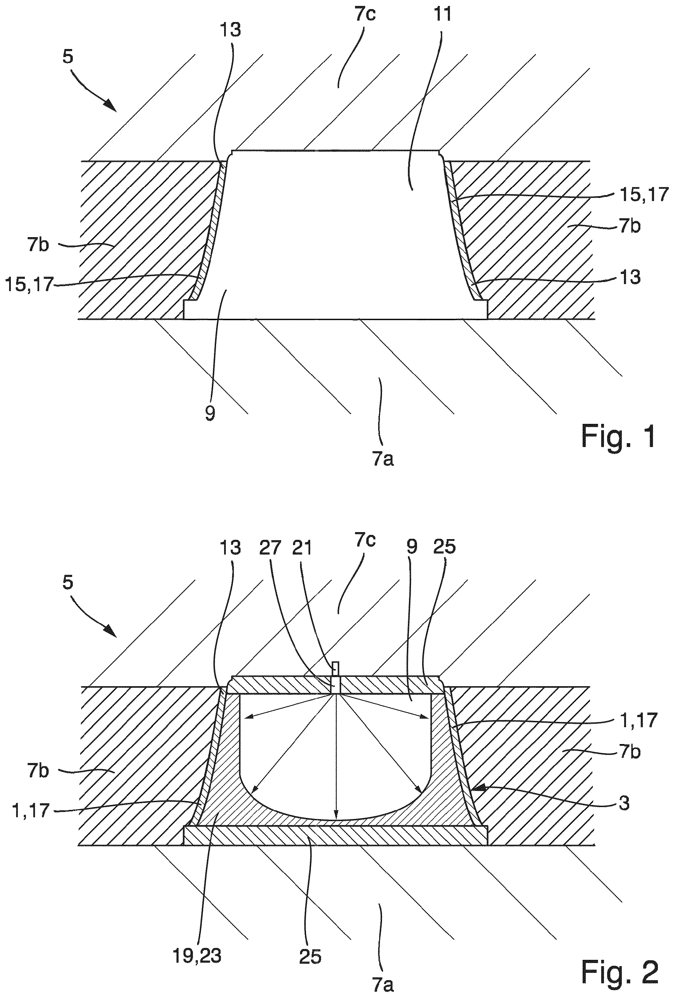

Fign. 1 und 2 verdeutlichen die Herstellung eines mit einer Beschichtung 1 beschichteten Auflagerelements 3 aus Elastomermaterial gemäß einer Ausführungsform des erfindungsgemäßen Verfahrens. In dieser Ausführungsform ist das Auflagerelement 3 als Federelement für Schienenfahrzeuge gebildet, nämlich entweder als Primärfederelement oder als Notfederelement für Luftfedern von Schienenfahrzeugen, und die Beschichtung 1 des Auflagerelements 3 ist eine Brandschutzbeschichtung.

Bei dem Verfahren wird zunächst eine Einspritzpressvorrichtung 5 mit mehreren relativ zueinander beweglichen Formteilen 7a, 7b, 7c bereitgestellt, die ein unbewegliches Formunterteil 7a, mehrere horizontal bewegliche Formseitenteile 7b und ein vertikal bewegliches Formoberteil 7c umfassen, wie in Fig. 1 und 2 dargestellt. Die Einspritzpressvorrichtung 5 ist so gebildet, dass die Formteile 7a, 7b, 7c in einer geschlossenen Stellung gemeinsam einen Hohlraum 9 umschließen. Der Hohlraum 9 entspricht dabei der Form des herzustellenden Auflagerelements 3.

In den Hohlraum 9 wird nun ein Formkern 11 eingelegt, wie in Fig. 1 dargestellt. Der Formkern 11 entspricht der Form des herzustellenden Auflagerelements 3 abzüglich der Beschichtung 1. Dabei bleibt zwischen den Formteilen 7a, 7b, 7c und dem Formkern 11 ein Spalt 13, welcher der Form der Beschichtung 1 des herzustellenden Auflagerelements 3 entspricht.

Anschließend wird, wie in Fig. 1 gezeigt, eine erste Mischung 15 in Form einer Elastomermischung in den Spalt eingefügt. In der vorliegenden Ausführungsform ist die erste Mischung 15 eine Brandschutzkautschukmischung zur Herstellung eines Brandschutzelastomermaterials, das von Feuer oder sehr hohen Temperaturen nicht bzw. nur sehr langsam zerstört wird. Danach werden die Formteile 7a, 7b, 7c geschlossen, wobei die erste Mischung 15 plastifiziert wird und den Spalt 13 vollständig ausfüllt. Auf diese Weise bildet die erste Mischung 15 eine Hülle 17, welche die Form der Beschichtung 1 hat.

Daraufhin wird die Hülle 17 anvulkanisiert bis zumindest die Oberfläche der Hülle 17 gehärtet ist, so dass die Hülle 17 von den Formteilen 7a, 7b, 7c und dem Formkern 11 gelöst werden kann.

Anschließend wird die Hülle 17 zum Abkühlen aus dem Hohlraum 9 entfernt. Dazu werden die Formteile 7a, 7b, 7c in die geöffnete Stellung gebracht, der Formkern 11 wird entnommen und anschließend wird die Hülle 17 entnommen. Dabei kann der Formkern 11 als Zerfallskern gebildet sein, der in kleine Teile zerlegt werden kann, die leichter entfernt werden können.

Nachfolgend wird die Hülle 17 zur Erhöhung der Steifigkeit bis unter die Glastemperatur abgekühlt, bis die Formstabilität der Hülle 17 erreicht ist und diese nach Entfernen des Formkerns 11 nicht mehr zusammenfällt. Das Abkühlen der Hülle 17 erfolgt in einer Kühlkammer oder durch Anblasen mit gekühltem Gas.

Nach dem Abkühlen wird die Hülle 17 wieder in den Hohlraum 9 eingefügt, so dass die Hülle 17 für den nachfolgenden Einspritzvorgang durch die Formteile 7a, 7b, 7c von außen gestützt wird.

Danach wird, wie in Fig.2 dargestellt, in geschlossener Stellung der Formteile 7a, 7b, 7c unter Druck eine zweite Mischung 19 in Form einer Elastomermischung in den Hohlraum 9 eingespritzt. Das Einspritzen erfolgt durch eine Öffnung 21 in dem Formoberteil 7c. Dabei wird die zweite Mischung 19 plastifiziert und bildet einen Auflagerkörper 23, der an der Innenseite der Hülle 17 anliegt. Der Auflagerkörper 23 enthält neben der zweiten Mischung 19 auch noch zwei Metallplatten 25, die an der Oberseite und an der Unterseite des Auflagerkörpers 23 vorgesehen und mit der zweiten Mischung 19 bzw. dem Elastomermaterial des Auflagerkörpers 23 verbunden sind. Die Metallplatten 25 werden vor bzw. nach dem Einspritzen der zweiten Mischung 19 in den Hohlraum 9 eingefügt, wobei der Hohlraum 9 die Form der Metallplatten 25 berücksichtigt und die obere Metallplatte eine mit der Öffnung 21 fluchtende Bohrung 27 zum Hindurchspritzen der zweiten Mischung 19 aufweist. Die Beschichtung 1 bedeckt dabei nur die seitlichen Oberflächen des Auflagerkörpers 23, die nicht von Metallplatten 25 bedeckt sind.

Schließlich wird der Auflagerkörper 23 zusammen mit der Hülle 17 in dem Hohlraum 9 ausvulkanisiert. Dabei werden der Auflagerkörper 23 und die Hülle 17 miteinander verbunden, so dass die Hülle 17 die Beschichtung 1 des Auflagerkörpers 23 bildet.

Anschließend der die Formteile 7a, 7b, 7c geöffnet und das fertiggestellte beschichtete Auflagerelement 3, d.h. der mit der Beschichtung 1 versehene Auflagerkörper 23, wird aus dem Hohlraum 9 entnommen.

Mit einem solchen Verfahren kann ein mit einer Brandschutzbeschichtung beschichtetes Auflagerelement 3 hoher Qualität in einem effizienten und gut reproduzierbaren Fertigungsprozess hergestellt werden.

## Patentansprüche

1. Verfahren zur Herstellung eines mit einer Beschichtung (1) beschichteten Auflagerelements (3) aus Elastomermaterial mit den Schritten
- Bereitstellen einer Einspritzpressvorrichtung (5) mit mehreren relativ zueinander beweglichen Formteilen (7a, 7b, 7c), die in geschlossener Stellung gemeinsam einen Hohlraum (9) umschließen, welcher der Form des herzustellenden Auflagerelements (3) entspricht,
- in den Hohlraum (9) Einlegen eines Formkerns (11), welcher der Form des herzustellenden Auflagerelements (3) abzüglich der Beschichtung (1) entspricht, so dass zwischen den Formteilen (7a, 7b, 7c) und dem Formkern (11) ein Spalt (13) bleibt, welcher der Form der Beschichtung (1) des herzustellenden Auflagerelements (3) entspricht,
- Einfügen einer ersten Mischung (15) in den Spalt (13), so dass die erste Mischung (15) den Spalt (13) ausfüllt und auf diese Weise eine Hülle (17) bildet, welche die Form der Beschichtung (1) hat,
- Anvulkanisieren der Hülle (17),
- Entfernen des Formkerns (11),
- Entfernen der Hülle (17) zum Abkühlen aus dem Hohlraum (9),
- Abkühlen der Hülle (17), bis deren Steifigkeit erhöht und Formstabilität erreicht ist,
- Einfügen der Hülle (17) in den Hohlraum (9),
- Einspritzen einer zweiten Mischung (19) in den Hohlraum (9), so dass diese einen Auflagerkörper (23) bildet, der an der Innenseite der Hülle (17) anliegt,
- Ausvulkanisieren des Auflagerkörpers (23) zusammen mit der Hülle (17), so dass diese miteinander verbunden werden und die Hülle (17) die Beschichtung (1) des Auflagerkörpers (23) bildet.

2. Verfahren nach Anspruch 1, wobei das Abkühlen der Hülle (17) in einer Kühlkammer oder durch Anblasen mit gekühltem Gas erfolgt.

3. Verfahren nach Anspruch 1bis 2, wobei die Beschichtung (1) eine Brandschutzbeschichtung ist.

4. Verfahren nach einem der Ansprüche 1 bis 3, wobei das Auflagerelement (3) als Notfederelement für Luftfedern von Schienenfahrzeugen oder als Primärfederelement für Schienenfahrzeuge gebildet ist.

## Claims

1. Process for producing a support element (3) made of elastomer material and coated with a coating (1) comprising the steps of
- provision of an injection press apparatus (5) comprising a plurality of mould parts (7a, 7b, 7c) movable relative to one another which in the closed position together encompass a cavity (9) corresponding to the shape of the support element (3) to be produced,
- insertion into the cavity (9) of a mould core (11) which corresponds to the shape of the support element (3) to be produced minus the coating (1) with the result that a gap (13) remains between the mould parts (7a, 7b, 7c) and the mould core (11) which corresponds to the shape of the coating (1) of the support element (3) to be produced,
- introduction of a first mixture (15) into the gap (13) so that the first mixture (15) fills the gap (13) and thus forms a shell (17) having the shape of the coating (1),
- part-vulcanization of the shell (17),
- removal of the mould core (11),
- removal of the shell (17) from the cavity (9) for cooling,
- cooling of the shell (17) until the stiffness thereof is increased and dimensional stability thereof is achieved,
- introduction of the shell (17) into the cavity (9),
- injection of a second mixture (19) into the cavity (9) so that this forms a support body (23) contacting the inside of the shell (17),
- full-vulcanization of the support body (23) together with the shell (17) so that these are joined to one another and the shell (17) forms the coating (1) of the support body (23).

2. Process according to Claim 1, wherein the cooling of the shell (17) is carried out in a cooling chamber or by blowing with cooled gas.

3. Process according to Claims 1 to 2, wherein the coating (1) is a fire protection coating.

4. Process according to any of Claims 1 to 3, wherein the support element (3) is in the form of an emergency spring element for air springs of rail vehicles or as a primary spring element for rail vehicles.

## Revendications

1. Procédé de fabrication d'un élément d'appui (3) en matériau élastomère revêtu d'un revêtement (1), avec les étapes suivantes
- la fourniture d'un dispositif de moulage par injection (5) avec plusieurs pièces moulées (7a, 7b, 7c) mobiles les unes par rapport aux autres, qui, en position fermée, entourent ensemble une cavité (9) qui correspond à la forme de l'élément d'appui (3) à fabriquer,
- la mise en place dans la cavité (9) d'un noyau de moule (11) qui correspond à la forme de l'élément d'appui (3) à fabriquer, moins le revêtement (1), de telle sorte qu'il reste entre les pièces moulées (7a, 7b, 7c) et le noyau de moule (11) un espace (13) qui correspond à la forme du revêtement (1) de l'élément d'appui (3) à fabriquer,
- l'insertion d'un premier mélange (15) dans l'espace (13) de telle sorte que le premier mélange (15) remplisse l'espace (13) et forme ainsi une enveloppe (17) qui a la forme du revêtement (1),
- la vulcanisation de l'enveloppe (17),
- le retrait du noyau de moule (11),
- le retrait de l'enveloppe (17) de la cavité (9) pour la refroidir,
- le refroidissement de l'enveloppe (17) jusqu'à ce que sa rigidité soit augmentée et que sa stabilité dimensionnelle soit atteinte,
- l'insertion de l'enveloppe (17) dans la cavité (9),
- l'injection d'un deuxième mélange (19) dans la cavité (9) de telle sorte que celui-ci forme un corps d'appui (23) qui s'appuie contre le côté intérieur de l'enveloppe (17),
- la vulcanisation du corps d'appui (23) conjointement avec l'enveloppe (17) de telle sorte que ceux-ci soient liés l'un à l'autre et que l'enveloppe (17) forme le revêtement (1) du corps d'appui (23).

2. Procédé selon la revendication 1, dans lequel le refroidissement de l'enveloppe (17) est effectué dans une chambre de refroidissement ou par soufflage de gaz refroidi.

3. Procédé selon les revendications 1 à 2, dans lequel le revêtement (1) est un revêtement ignifuge.

4. Procédé selon l'une quelconque des revendications 1 à 3, dans lequel l'élément d'appui (3) est formé comme un élément de ressort de secours pour des ressorts pneumatiques de véhicules ferroviaires ou comme un élément de ressort primaire pour des véhicules ferroviaires.
